# EUROPÄISCHE PATENTSCHRIFT

(11) **EP 0 758 534 B1**
(45) Veröffentlichungstag und Bekanntmachung des Hinweises auf die Patenterteilung: **02.11.2000**
(21) Anmeldenummer: 96111878.3
(22) Anmeldetag: 24.07.1996
(51) Int. Cl.: A46D 3/00

(54) **Bürste und Verfahren zu ihrer Herstellung**
Brush and manufacturing method therefore
Brosse et procédé de fabrication

(30) Priorität: 16.08.1995 DE 19530057
(43) Veröffentlichungstag der Anmeldung: 19.02.1997
(73) Patentinhaber: CORONET-Werke Gesellschaft mit beschränkter Haftung, 69483 Wald-Michelbach (DE)
(72) Erfinder: Weihrauch Georg, D-69483 Wald-Michelbach (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 613 636
- WO-A-91/07114
- DE-A- 2 709 899
- DE-A- 3 832 520
- DE-C- 3 640 898
- US-A- 4 033 710
- US-A- 5 353 464

## Beschreibung

Die Erfindung betrifft eine Bürste mit einem durch Spritzgießen hergestellten einteiligen Bürstenkörper aus Kunststoff, bestehend aus einem Kopf mit einem Borstenbesatz und einem formstabilen Griff mit einem gegenüber dem Kopf größeren Querschnitt.

Bürsten, insbesondere Zahnbürsten, bestehen heute vollständig aus Kunststoff. Aufgrund des unterschiedlichen Anforderungsprofils bestehen die Borsten zumeist aus hochwertigem Polyamid, das durch Extrudieren zu dünnen Fasern verarbeitet wird, die anschließend verstreckt und thermisch stabilisiert werden. Auf diese Weise lassen sich die erwünschten Eigenschaften, nämlich hohe Flexibilität bei gutem Aufrichtungsvermögen, hohe Dauerfestigkeit, gute Abriebfestigkeit und chemische Beständigkeit erreichen. Der Bürstenkörper hingegen besteht zumeist aus einem preiswerteren Kunststoff, der durch Spritzgießen hergestellt wird. Der Bürstenkörper muß im Kopfbereich in Abhängigkeit von der Art der Befestigung der Borsten so dimensioniert werden, daß die Borsten, die gegebenenfalls bündelweise zusammengefaßt sind, ausreichend fest zu verankern. Andererseits sollte der Kopf möglichst flach sein, um in der Mundhöhle wenig Raum zu beanspruchen bzw. den vorhandenen Raum bei im wesentlichen gestreckten Borsten ausnutzen zu können. Der Griff muß formstabil sein. Dabei ist ferner erwünscht, daß der Kopf gegenüber dem Griff etwas nachgiebig ist, um den Andruck beim Zähneputzen zu dämpfen bzw. den Andruck zu steuern. Es ist deshalb zwischen Kopf und Griff ein Hals kleineren Querschnittes vorgesehen, der dem Bürstenkörper eine gewisse Flexibilität verleiht. Auch hat die durch den Hals gegebene Einschnürung eine ergonomische Funktion, um die Zahnbürste bei geschlossenem Mund in den gewünschten Putzbewegungen führen zu können.

Die für Zahnbürsten vornehmlich verwendeten Thermoplaste erfüllen diese gegenläufigen Forderungen nur sehr unzureichend. Dies gilt vor allem für die gewünschte Flexibilität zwischen Kopf und Griff sowie für die weiterhin erwünschten kleinen Querschnitte am Kopf und am Hals. So muß der Querschnitt im Bereich des Halses relativ groß sein, um nicht bei der Benutzung oder einer sonstigen außergewöhnlichen Beanspruchung an die Bruchgrenze zu kommen. Das gleiche gilt für den Kopf, da dieser durch die Befestigungsmaßnahmen für die Borstenbündel im Querschnitt geschwächt wird, insbesondere wenn die Bündel -wie üblich- in Löcher des Kopfs mechanisch oder thermisch verankert oder aber eingespritzt werden. Auch beim Aufschweißen der Bündel auf den Kopf kommt es zur Materialschwächung, da hierbei die oberflächige Molekularstruktur am Kopf nachteilig verändert wird.

Um die notwendige Flexibilität des Kopfs gegenüber dem Griff zu erreichen, werden deshalb Mehrkomponenten-Bürsten verwendet, die im Bereich des Halses eingesetzte Federn (DE 38 40 136, WO 93/15 627) oder eingesetzte, gummielastische Körper aufweisen (DE 39 23 495, EP 0 613 636). Daneben gibt es Vorschläge, wie die Flexibilität im Halsbereich gestaltet sein sollte (DE 36 40 898), doch lassen diese Vorschläge offen, wie dies konstruktiv oder technologisch erreicht werden soll.

Der Erfindung liegt die Aufgabe zugrunde, eine Bürste und ein Verfahren zu ihrer Herstellung vorzuschlagen, die die Verwendung eines einzigen und zudem preiswerten Kunststoffs gestatten, der eine ausreichende Flexibilität im Bereich des Kopfs bzw. zwischen diesem und dem Griff bei gleichwohl im wesentlichen starrer Gestaltung des Griffs zuläßt und insbesondere bei Zahnbürsten das gebrauchstechnische Anforderungsprofil erfüllt.

Ausgehend von der eingangs genannten Bürste wird diese Aufgabe dadurch gelöst, daß der Bürstenkörper aus einem mit einem Treibmittel versetzten Elastomer besteht und im Bereich des Griffs aufgeschäumt ist, während er im Bereich des kleineren Querschnitts des Kopfs im wesentlichen massiv ausgebildet ist.

Elastomere weisen zunächst den gebrauchstechnischen Vorteil auf, daß sie einerseits relativ weich sind, also eine Verletzungsgefahr bei Anwendung in der Mund- und Körperhygiene weitestgehend ausschließen. Sie haben ergonomisch den Vorteil einer relativ stumpfen Oberfläche und damit einer guten Griffigkeit. Ferner zählt zu ihren selbstverständlichen Eigenschaften ein gutes Biegevermögen bei hoher Bruchfestigkeit. Bietet sich dieser Werkstoff also eigentlich für Bürstenkörper an, ist das Biegevermögen doch auch von Nachteil, da der Bürstenkörper im Griffbereich stark überdimensioniert werden muß, um einen starren Griff zu erhalten. Dies wiederum würde einen entsprechenden Materialeinsatz bei ergonomisch nicht optimaler Querschnittsgestaltung mit sich bringen. Die Erfindung löst das Problem dadurch, daß das Elastomer mit einem Treibmittel versetzt ist, das beim Spritzgießen dazu führt, daß die Schmelze zwar in den Bereichen mit größerem Querschnitt aufbläht, im Bereich engerer Querschnitte aber das Treibmittel sich nicht oder nur unbedeutend entfalten kann. Dies führt zu einem Bürstenkörper, der im Bereich des Kopfs massiv ausgebildet ist, so daß das Elastomer dort seine günstigen Biegeeigenschaften aufweist, während im Bereich des Griffs aufgrund des Porenvolumens die Biegefähigkeit weitgehend eliminiert ist. Damit können auch im Griffbereich übliche Querschnitte verwirklicht werden. Der Materialbedarf in dem geschäumten Bereich liegt je nach Schäumungsgrad um 20 bis 50% niedriger als bei einer massiven Ausbildung. Von besonderem Vorteil ist, daß die bisher nur durch Mehrkomponenten-Ausführungen erreichbaren Vorteile nur mit einem einzigen Elastomer bei gleichem oder geringerem Materialeinsatz erreicht wurden.

Durch die massive Ausbildung des Kopfs lassen sich die Borsten bzw. Bündel in jeder beliebigen, herkömmlichen Befestigungstechnik am Kopf verankern.

Das vorgenannte Prinzip der Erfindung läßt sich an jeder Bürste verwirklichen, vorzugsweise jedoch an Zahnbürsten, bei denen der Griff über einen Hals an den Kopf anschließt und gleichfalls nur der Griff geschäumt und damit formstabil ist, während der biegeelastische Hals ein Auslenken des Kopfs gestattet und auch der Kopf sich konvex bzw. konkav ausbiegen kann.

Bei Zahnbürsten schlägt die Erfindung weiterhin vor, daß zwischen dem Kopf bzw. Hals und dem Griff ein Übergangsbereich mit stetig größer werdendem Querschnitt vorgesehen ist und das Porenvolumen des im Bereich des Griffs geschäumten Elastomers in dem Übergangsbereich zum Hals stetig abnimmt.

Auf diese Weise ist sichergestellt, daß zwischen Hals und Griff eine ausreichend stabile Zone vorhanden ist, in der das Porenvolumen vom Griff zum Hals hin stetig abnimmt, so daß im Übergangsbereich keine zu hohen Kerbspannungen, die zum Bruch führen könnten, auftreten können.

In weiterhin vorteilhafter Ausführung ist vorgesehen, daß der Bürstenkörper im Bereich des Kopfs und/oder des Halses eine glatte hochglänzende Oberfläche aufweist, während der Bürstenkörper im Bereich des Griffs eine rauhe oder strukturierte Oberfläche aufweisen kann.

Die glatte hochglänzende Oberfläche im Kopf- und Halsbereich bringt die gewünschte Gleitfähigkeit im Mundraum. Sie genügt auch in besonderem Maß den hygienischen Anforderungen und begünstigt schließlich auch die Festigkeit in diesen Bereichen kleiner Querschnitte. Die rauhe oder strukturierte Oberfläche im Griffbereich erhöht die Griffigkeit.

Zur Herstellung einer solchen Bürste geht die Erfindung von dem bekannten Spritzgießverfahren aus, bei dem eine wenigstens zweiteilige Form verwendet wird, die zur Abbildung des Kopfs bzw. Halses kleinere Formquerschnitte als zur Abbildung des Griffs aufweist. Dieses Verfahren zeichnet sich erfindungsgemäß dadurch aus, daß als Kunststoff ein Elastomer mit einem Treibmittel verwendet wird und die Formquerschnitte für den Kopf bzw. den Hals gegenüber denjenigen für den Griff soviel kleiner gewählt werden, daß der Kunststoff nur im Bereich des Griffs aufgeschäumt wird.

Praktische Versuche haben gezeigt, daß sich diese Forderung bei üblichen Kopf- und Griffquerschnitten verwirklichen lassen. Je nach Form des Bürstenkörpers kann auch eine entsprechende Anordnung der Anspritzpunkte dem gewünschten Ergebnis förderlich sein.

Bei einer Zahnbürste, deren Bürstenkörper aus Kopf, Hals, Griff und einem Übergangsbereich zwischen diesen besteht, werden die Formquerschnitte von Kopf, Hals, Übergangsbereich und Griff so gewählt, daß nur der Kunststoff im wesentlichen im Bereich des Griffs und des Übergangsbereichs aufgeschäumt wird, wobei das Porenvolumen vom Griff in den Übergangsbereich allmählich abnimmt.

Eine andere Möglichkeit zur Herstellung der Bürste besteht erfindungsgemäß darin, daß an der Form wenigstens zwei Spritzkanäle vorgesehen werden, von denen der erste in dem den Kopf bzw. den Hals, der zweite in dem den Griff abbildenden Formbereich mündet, und daß als Kunststoff ein Elastomer verwendet wird, das dem ersten Spritzkanal in reiner Form, dem zweiten Spritzkanal mit Treibmittel versetzt zugeführt wird.

Dieses Verfahren, das auch als Gegendruckverfahren bezeichnet wird, läßt sich so steuern, daß das reine Elastomer nur den Formraum für den Kopf bzw. Hals, das aufschäumende Elastomer hingegen nur den Formraum des Griffs ausfüllt und im Übergangsbereich von Hals und Griff eine Vermischung stattfindet.

Eine Variante des Verfahrens zeichnet sich dadurch aus, daß der Bürstenkörper in einer Spritzgießform mit hochglanzpolierten Formflächen im Bereich des Kopfs und/oder des Halses geformt wird, während der Bürstenkörper im Bereich des Griffs mittels rauher oder strukturierter Formflächen geformt wird.

Damit läßt sich eine Bürste verwirklichen, deren Oberfläche die unterschiedlichen Anforderungen in den verschiedenen Bereichen erfüllt -Gleitfähigkeit einerseits, Griffigkeit andererseits.

Das erfindungsgemäße Verfahren gibt äufgrund der massiven Ausbildung des Kopfs die Möglichkeit, die Borsten, die gegebenenfalls bündelweise zusammengefaßt sind, in einer der herkömmlichen Befestigungstechniken zu verankern. So können die Borsten beispielsweise in Kanäle einer der beiden Teile der Spritzgießform in den Formraum hineinragend eingesetzt und von der den Bürstenkörper bildenden Spritzgießmasse umspritzt werden.

Stattdessen ist es möglich, am Kopf des Bürstenkörpers anläßlich des Spritzens Löcher zur Aufnahme der Borsten bzw. der Borstenbündel abzuformen, in denen dann die Borsten bzw. Bündel nachträglich mechanisch oder thermisch befestigt werden.

Je nach Befestigungsart ist es von Vorteil, wenn die Borsten bzw. die Borstenbündel an ihrem befestigungsseitigen Ende zu einem Kopf aufgeschmolzen werden, mit dem sie dann im Bürstenkörper verankert werden. Dies empfiehlt sich vor allem beim Einspritzen der Bündel, wie dies an sich bekannt ist.

Stattdessen können die Borsten bzw. Bündel mit einem Kopf größeren Querschnitts als der engste Querschnitt der Löcher am Kopf versehen werden und unter borstenparallelem Druck in die Löcher eingedrückt werden, wobei die elastischen Eigenschaften des Elastomers ausgenutzt werden, das unter dem Druck ausweicht und den Bündelkopf anschließend fest umgreift. Gegebenenfalls können die Löcher zu diesem Zweck noch mit Hinterschnitten versehen sein.

Nachstehend ist die Erfindung anhand eines in der Zeichnung wiedergegebenen Ausführungsbeispiels beschrieben. In der Zeichnung zeigen:
- Figur 1: einen Längsschnitt durch eine Zahnbürste und
- Figuren 2 bis 5: die Querschnitte II-II bis V-V gemäß Figur 1.

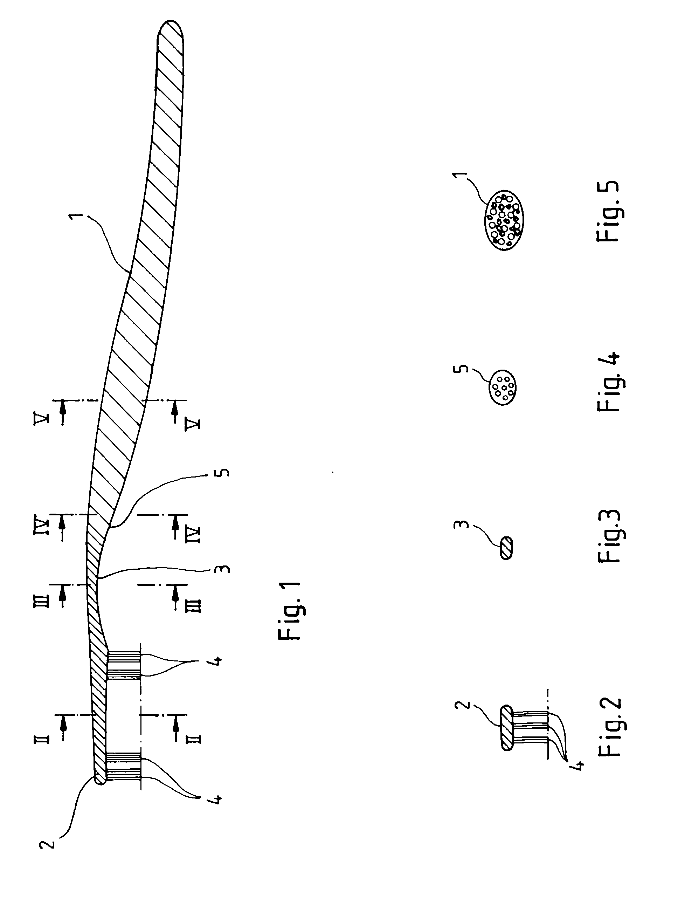

Die in Figur 1 wiedergegebene Zahnbürste besteht aus einem Griff 1, einem Kopf 2 und dem dazwischen befindlichen Hals 3, der über einen Übergangsbereich 5 in den Griff übergeht. Ferner weist die Zahnbürste im Bereich des Kopfs 2 einen Borstenbesatz aus einzeln stehenden Borsten oder Bündeln 4 auf.

Der Bürstenkörper besteht aus einem Elastomer, das im Bereich des Kopfs 2 und des Halses 3 massiv vorliegt, während es im Bereich des Griffs 1 mittels eines Treibmittels aufgeschäumt ist, so daß dort dem Elastomer die Biegefähigkeit weitgehend genommen ist. Im Übergangsbereich 5 zwischen dein Hals 3 und dem Griff 1 kommt das Treibmittel nur teilweise zur Wirkung, so daß sich dort ein in Richtung zum Griff zunehmendes Porenvolumen ausbildet.

Der Querschnittsverlauf über die Länge des Bürstenkörpers ist aus den Figuren 2 bis 5 ersichtlich. Im Bereich des Kopfs (Figur 2) ist ein flacher aber relativ breiter Querschnitt erwünscht, der im Bereich des Halses 3 (Figur 3) in den schmalsten Querschnitt des Bürstenkörpers übergeht. Im Übergangsbereich (Figur 4) nimmt dann der Querschnitt wieder allmählich zu, bis er den maximalen Querschnitt im Bereich des Griffs 1 annimmt.

Während das Elastomer im Bereich des Kopfs 2 und des Halses 3 in massiver Form vorliegt, bildet sich im Übergangsbereich 5 mit zunehmendem Querschnitt ein zunehmendes Porenvolumen aus, das im Bereich des Griffs 1 seinen größten Wert annimmt. Dies ist in Figur 1 durch eine Straffur mit zunehmendem Abstand und in den Figuren 4 und 5 gegenüber Figur 2 und 3 durch entsprechende Hohlräume angedeutet.

Die Borsten bzw. Bündel 4 können in vorgespritzte Löcher des Kopfs 2 mechanisch oder thermisch eingesetzt oder aber unmittelbar in der Spritzgießform umspritzt werden. Diese Befestigungstechniken sind bekannt und bedürfen deshalb hier keiner weiteren Beschreibung.

## Patentansprüche

1. Bürste mit einem durch Spritzgießen hergestellten einteiligen Bürstenkörper aus Kunststoff, bestehend aus einem Kopf mit einem Borstenbesatz und einem formstabilen Griff mit einem gegenüber dem Kopf größeren Querschnitt, dadurch gekennzeichnet, daß der Bürstenkörper aus einem mit einem Treibmittel versetzten Elastomer besteht und im Bereich des Griffs (1) aufgeschäumt ist, während er im Bereich des kleineren Querschnitts des Kopfs (2) im wesentlichen massiv ausgebildet ist.

2. Bürste, insbesondere Zahnbürste mit einem durch Spritzgießen hergestellten einteiligen Bürstenkörper aus Kunststoff, bestehend aus einem Kopf mit einem Borstenbesatz und einem formstabilen Griff mit einem gegenüber dem Kopf größeren Querschnitt und einem Kopf und Griff verbindenden Hals, dadurch gekennzeichnet, daß der Bürstenkörper aus einem mit einem Treibmittel versetzten Elastomer besteht und im Bereich des Griffs (1) aufgeschäumt ist, während er im Bereich des kleineren Querschnitts des Kopfs (2) und des Halses (3) im wesentlichen massiv ausgebildet ist.

3. Bürste, nach Anspruch 1 oder 2, dadurch gekennzeichnet, daß zwischen dem Kopf (2) bzw. Hals (3) und dem Griff (1) ein Übergangsbereich (5) mit stetig größer werdendem Querschnitt vorgesehen ist und das Porenvolumen des im Bereich des Griffs (1) geschäumten Kunststoffs in dem Übergangsbereich (5) zum Hals (3) stetig abnimmt.

4. Bürste nach einem der Ansprüche 1 bis 3, dadurch gekennzeichnet, daß der Bürstenkörper im Bereich des Kopfs (2) und/oder des Halses (3) eine glatte hochglänzende Oberfläche aufweist.

5. Bürste nach einem der Ansprüche 1 bis 4, dadurch gekennzeichnet, daß der Bürstenkörper im Bereich des Griffs (1) eine rauhe oder strukturierte Oberfläche aufweist.

6. Verfahren zur Herstellung einer Bürste aus Kunststoff nach Anspruch 1 oder 2, durch Spritzgießen in einer wenigstens zweiteiligen Form, die zur Abbildung des Kopfs bzw. des Halses kleinere Formquerschnitte als zur Abbildung des Griffs aufweist,
dadurch gekennzeichnet, daß als Kunststoff ein Elastomer mit einem Treibmittel verwendet wird und die Formquerschnitte für den Kopf (2) bzw. den Hals (3) gegenüber denjenigen für den Griff (1) soviel kleiner gewählt werden, daß der Kunststoff im wesentlichen nur im Bereich des Griffs aufgeschäumt wird.

7. Verfahren nach Anspruch 6 zur Herstellung von Bürsten, insbesondere Zahnbürsten nach Anspruch 3,
dadurch gekennzeichnet, daß die Formquerschnitte von Kopf, Hals, Übergangsbereich sowie Griff so gewählt werden, daß der Kunststoff im wesentlichen nur im Bereich des Griffs (1) und des Übergangsbereichs (5) zum Hals aufgeschäumt wird, wobei das Porenvolumen vom Griff in den Übergangsbereich allmählich abnimmt.

8. Verfahren zur Herstellung einer Bürste aus Kunststoff nach Anspruch 1 oder 2, durch Spritzgießen in einer wenigstens zweiteiligen Form, die zur Abbildung des Kopfs bzw. des Halses kleinere Formquerschnitte als zur Abbildung des Griffs aufweist,
dadurch gekennzeichnet, daß an der Form wenigstens zwei Spritzkanäle vorgesehen werden, von denen der erste in dem den Kopf bzw. den Hals, der zweite in dem den Griff abbildenden Formbereich mündet, und daß als Kunststoff ein Elastomer verwendet wird, das dem ersten Spritzkanal in reiner Form, dem zweiten Spritzkanal mit Treibmittel versetzt zugeführt wird.

9. Verfahren nach einem der Ansprüche 6 bis 8 zur Herstellung einer Bürste nach Anspruch 4, dadurch gekennzeichnet, daß der Bürstenkörper in einer Spritzgießform mit hochglanzpolierten Formflächen im Bereich des Kopfs und/oder des Halses geformt wird.

10. Verfahren nach einem der Ansprüche 6 bis 9 zur Herstellung einer Bürste nach Anspruch 5, dadurch gekennzeichnet, daß der Bürstenkörper in einer Spritzgießform mit rauhen oder strukturierten Formflächen im Bereich des Griffs geformt wird.

11. Verfahren nach einem der Ansprüche 6 bis 10, dadurch gekennzeichnet, daß die Borsten (4), gegebenenfalls bündelweise, in Kanäle einer der beiden Teile der Spritzgießform in den Formraum hineinragend eingesetzt und von dem den Bürstenkörper bildenden Elastomer umspritzt werden.

12. Verfahren nach einem der Ansprüche 6 bis 10, dadurch gekennzeichnet, daß am Kopf (2) des Bürstenkörpers anläßlich des Spritzens Löcher zur Aufnahme der Borsten (4) bzw. der Borstenbündel abgeformt werden.

13. Verfahren nach Anspruch 12, dadurch gekennzeichnet, daß die Borsten (4) in den Löchern des Kopfs (2) mechanisch oder thermisch befestigt werden.

14. Verfahren nach einem der Ansprüche 6 bis 13, dadurch gekennzeichnet, daß die Borsten bzw. die Borstenbündel (4) an ihrem befestigungsseitigen Ende zu einem Kopf aufgeschmolzen werden, mit dem sie im Kopf (2) des Bürstenkörpers verankert werden.

15. Verfahren nach Anspruch 14, dadurch gekennzeichnet, daß die Borsten bzw. Bündel (4) mit einem Kopf größeren Querschnitts als der engste Querschnitt der Löcher versehen und unter borstenparallelem Druck in die Löcher eingedrückt werden.

## Claims

1. Brush with a one-piece, plastic brush body manufactured by injection moulding, comprising a head with a bristle configuration and a dimensionally stable handle having a larger cross-section than the head, characterized in that the bristle body comprises an elastomer mixed with an expanding agent and expanded in the area of the handle (1), whereas it is substantially solid in the area of the smaller cross-section of the head (2).

2. Brush, particularly toothbrush with a one-piece, plastic brush body manufactured by injection moulding, comprising a head with a bristle configuration and a dimensionally stable handle with a larger cross-section than the head and a neck connecting the head and the handle, characterized in that the brush body comprises an elastomer mixed with an expanding agent and expanded in the area of the handle (1), whereas in the area of the smaller cross-section of the head (2) and the neck (3) it is constructed in a substantially solid manner.

3. Brush according to claim 1 or 2, characterized in that, between the head (2) and/or neck (3) and the handle (1) is provided a transition area (5) whose cross-section constantly increases and the pore volume of the plastic expanded in the area of the handle continuously decreases in the transition area (5) to the neck (3).

4. Brush according to one of the claims 1 to 3, characterized in that the brush body has a smooth, ultra-bright surface in the area of the head (2) and/or neck (3).

5. Brush according to one of the claims 1 to 4, characterized in that in the area of the handle (1) the brush body has a rough or structured surface.

6. Method for the manufacture of a brush from plastic according to claim 1 or 2, by injection moulding in an at least two-part mould, which for imaging the head or the neck has smaller mould cross-sections than for imaging the handle, characterized in that the plastic is constituted by an elastomer with an expanding agent and the mould cross-sections for the head (2) or the neck (3) are made that much smaller than for the handle (1) that the plastic is expanded substantially only in the area of the handle.

7. Method according to claim 6 for the manufacture of brushes, particularly toothbrushes according to claim 3, characterized in that the mould cross-sections of the head, neck, transition area and handle are selected in such a way that the plastic is substantially only expanded in the area of the handle (1) and the transition area (5) to the neck, the pore volume of the handle gradually decreases in the transition area.

8. Method for the manufacture of a brush from plastic according to claim 1 or 2, by injection moulding in an at least two-part mould, which for imaging the head or neck has smaller mould cross-sections than for imaging the handle, characterized in that on the mould are provided at least two injection channels, whereof the first issues into the mould area imaging the head or neck and the second into that imaging the handle and that the plastic is constituted by an elastomer, which is supplied to the first injection channel in pure form and to the second injection channel mixed with expanding agent.

9. Method according to one of the claims 6 to 8 for the manufacture of a brush according to claim 4, characterized in that the brush body is moulded in an injection mould with ultra-bright-polished mould faces in the area of the head and/or neck.

10. Method according to one of the claims 6 to 9 for the manufacture of a brush according to claim 5, characterized in that the brush body is moulded in an injection mould with rough or structured mould faces in the area of the handle.

11. Method according to one of the claims 6 to 10, characterized in that the bristles (4), optionally in bundles, are inserted in channels of one of the two parts of the injection mould projecting into the mould cavity and the elastomer forming the brush body is injected around the same.

12. Method according to one of the claims 6 to 10, characterized in that during injection holes for receiving the bristles (4) or bristle bundles are formed on the brush body head (2).

13. Method according to claim 12, characterized in that the bristles (4) are mechanically or thermally fixed in the holes in head (2).

14. Method according to one of the claims 6 to 13, characterized in that at their fastening-side end the bristles or bristle bundles (4) are melted to a head with which they are anchored in the brush body head (2).

15. Method according to claim 14, characterized in that the bristles or bundles (4) provided with a head having a larger cross-section than the narrowest cross-section of the holes and are pressed into said holes under bristle-parallel pressure.

## Revendications

1. Brosse comprenant un corps de brosse d'une seule pièce fabriqué par moulage par injection, comportant une tête présentant une garniture de poils et un manche rigide de section supérieure à celle de la tête, caractérisée en ce que le corps de brosse est réalisé dans un élastomère mélangé à un agent d'expansion et est expansé dans la zone du manche (1), alors qu'il est réalisé sensiblement massif dans la zone de la section réduite de la tête (2).

2. Brosse, en particulier brosse à dents comprenant un corps de brosse d'une seule pièce fabriqué par moulage par injection, comportant une tête présentant une garniture de poils et un manche stable de section supérieure à celle de la tête et présentant un col reliant la tête et le manche, caractérisée en ce que le corps de brosse est réalisé dans un élastomère mélangé à un agent d'expansion et est expansé dans la zone du manche (1), alors qu'il est réalisé sensiblement massif dans la zone de la section réduite de la tête (2) et du col (3).

3. Brosse selon la revendication 1 ou 2, caractérisée en ce qu'il est prévu entre la tête (2) ou le col (3) et le manche (1) une zone de transition (5) dont la section va en augmentant, et en ce que le volume poreux de la matière synthétique expansée dans la zone du manche (1) va en diminuant dans la zone de transition (5) vers le col (3).

4. Brosse selon l'une quelconque des revendications 1 à 3, caractérisée en ce que le corps de brosse présente dans la zone de la tête (2) et/ou du col (3) une surface lisse polie.

5. Brosse selon l'une quelconque des revendications 1 à 4, caractérisée en ce que le corps de brosse présente dans la zone du manche (1) une surface rugueuse ou structurée.

6. Procédé de fabrication d'une brosse en matière synthétique selon la revendication 1 ou 2 par moulage par injection dans un moule composé au moins de deux parties, qui pour la reproduction de la tête ou du col présente des sections de moule inférieures à celles pour la reproduction du manche, caractérisé en ce que la matière synthétique utilisée est un élastomère comprenant un agent d'expansion et que l'on choisit une réduction des sections de moule pour la tête (2) ou le col (3) par rapport à celles destinées au manche (1) telle que la matière synthétique n'est essentiellement expansée que dans la zone du manche.

7. Procédé selon la revendication 6 de fabrication de brosses, en particulier de brosses à dents selon la revendication 3, caractérisé en ce que l'on choisit les sections de moule pour la tête, pour le col de la zone de transition ainsi que pour le manche de telle façon que la matière synthétique n'est essentiellement expansée que dans la zone du manche (1) et de la zone de transition (5) vers le col, le volume poreux diminuant progressivement du manche vers la zone de transition.

8. Procédé de fabrication d'une brosse en matière plastique selon la revendication 1 ou 2 par moulage par injection dans un moule comprenant au moins deux parties et présentant pour la reproduction de la tête ou du col des sections inférieures à celles utilisées pour la reproduction du manche, caractérisé en ce que l'on prévoit sur le moule au moins deux canaux d'injection, dont le premier débouche dans la zone du moule reproduisant la tête ou le col, le deuxième dans celle reproduisant le manche, et en ce que la matière synthétique utilisée consiste en un élastomère qu'on introduit dans le premier canal sous forme pure et, dans le deuxième, mélangé à un agent d'expansion.

9. Procédé selon l'une quelconque des revendications 6 à 8 de fabrication d'une brosse selon la revendication 4, caractérisé en ce que le corps de brosse est moulé dans un moule d'injection à surfaces polies dans la zone de la tête et/ou du col.

10. Procédé selon l'une quelconque des revendications 6 à 9 de fabrication d'une brosse selon la revendication 5, caractérisé en ce que le corps de brosse est moulé dans un moule d'injection à surfaces rugueuses ou structurées dans la zone du manche.

11. Procédé selon l'une quelconque des revendications 6 à 10, caractérisé en ce que les poils (4), le cas échéant sous forme de faisceaux, sont logés dans des canaux d'une des deux parties du moule d'injection et en saillie dans l'espace du moule, et coulés dans l'élastomère constituant le corps de brosse.

12. Procédé selon l'une quelconque des revendications 6 à 10, caractérisé en ce que lors de l'injection, on moule sur la tête (2) du corps de brosse des ouvertures pour recevoir les poils (4) ou les faisceaux de poils.

13. Procédé selon la revendication 12, caractérisé en ce que les poils (4) sont fixés mécaniquement ou thermiquement dans les ouvertures de la tête (2).

14. Procédé selon l'une quelconque des revendications 6 à 13, caractérisé en ce que les poils ou les faisceaux de poils (4) sont conformés par fusion, à leur extrémité de fixation, en une saillie par laquelle ils sont ancrés dans la tête (2) du corps de brosse.

15. Procédé selon la revendication 14, caractérisé en ce que l'on forme sur les poils ou les faisceaux (4) une saillie de section supérieure à la section la plus étroite des ouvertures et en ce qu'on les presse dans les ouvertures en exerçant une pression parallèle aux poils.
